# EUROPEAN PATENT APPLICATION

(11) **EP 4 826 690 A1**
(43) Date of publication of application: **21.10.2026**
(21) Application number: 26161706.2
(22) Date of filing: 02.03.2026
(51) Int. Cl.: G07G 1/00, G06Q 20/40, G07G 3/00

(54) **MERCHANDISE REGISTRATION DEVICE FOR SHOPPING CART AND MERCHANDISE REGISTRATION SYSTEM**

(30) Priority: 17.04.2025 JP 2025067811
(71) Applicant: Toshiba TEC Kabushiki Kaisha, Tokyo 141-8562 (JP)
(72) Inventor: Otake, Haruka, Tokyo, 141-8562 (JP)
(74) Representative: Bandpay & Greuter

(57) **Abstract**

According to one embodiment, a merchandise registration device for a shopping cart has a communication controller connectable to a store server and a device controller connectable to a product scanner and a weight sensor on the shopping cart. A control unit acquires a merchandise code from the product scanner, outputs the acquired merchandise code to the store server along with weight change information from the weight sensor, a code acquisition time for the merchandise code, a weight acquisition time for the weight change, and an indication whether the merchandise code was acquired for a merchandise registration or deregistration event. The registration device can receive an inappropriate action notice from the store server that indicates an inappropriate action type detected, then generate a user notification in response to receiving the inappropriate action notice and output a notice for the detected action type indicated in the inappropriate action notice.

## Description

### FIELD

Embodiments described herein relate generally to merchandise registration devices for a shopping cart and a merchandise registration system incorporating such devices.

### BACKGROUND

In the related art, there are systems including merchandise registration devices mounted on a shopping cart. In such systems, a customer can register merchandise to be purchased while shopping in a store.

In such a shopping cart mounted system, when merchandise desired to be purchased is being registered, an inappropriate action, such as placing unregistered merchandise in the shopping cart or removing different merchandise from the shopping cart than that being formally unregistered (cancelled from the transaction) may be intentionally or accidentally performed. Therefore, to ensure a normal sales transaction, it may be necessary for a store clerk to collate the registered merchandise with the merchandise in the shopping cart. However, this takes time and effort at settlement making these either less efficient and/or subject to fraudulent behaviors.

### BRIEF DESCRIPTION OF THE DRAWINGS

FIG. 1 is a system configuration diagram of a shopping monitoring system according to an embodiment.
FIG. 2 is an external view illustrating an example of a shopping cart in a shopping monitoring system according to an embodiment.
FIG. 3 is a hardware block diagram of a shopping cart in a shopping monitoring system according to an embodiment.
FIG. 4 is a hardware block diagram of a store server in a shopping monitoring system according to an embodiment.
FIG. 5 depicts a data structure of an inappropriate action master stored in a store server.
FIG. 6 depicts a data structure of a merchandise storing state file stored in a store server.
FIG. 7 depicts a data structure of an inappropriate action record file stored in a store server.
FIG. 8 is a hardware block diagram of a settlement device in a shopping monitoring system according to an embodiment.
FIG. 9 depicts an example of a flow of information in a shopping monitoring system according to an embodiment.
FIG. 10 depicts an example of a pop-up display displayed on a display of a cart terminal when an inappropriate action is detected.
FIG. 11 depicts an example of a receipt dispensed by a settlement device.
FIG. 12 depicts a functional configuration of a shopping monitoring system according to an embodiment.
FIG. 13 is a flowchart of processing performed by a cart terminal in a shopping monitoring system according to an embodiment.
FIG. 14 is a flowchart of processing performed by a store server in a shopping monitoring system according to an embodiment.
FIG. 15 is a flowchart of processing performed by a settlement device provided in a shopping monitoring system according to an embodiment.

### DETAILED DESCRIPTION

A problem in the related art is solved by a merchandise registration, a shopping cart for a merchandise registration system, and a merchandise registration system according to appended claims. The present invention relates to monitoring of transaction/registration behaviors during the use of a shopping cart mounted registration device to determine whether store clerk collation at or before settlement is necessary so as to reduce the time and effort of the overall collation operations of the store clerk at the time of settlement.

In general, according to one embodiment, a merchandise registration device for a shopping cart includes: a communication controller connectable to a store server device, a peripheral device controller connectable to a product scanner device and a weight sensor on a shopping cart, and a control unit. The control unit is configured to: acquire a merchandise code from the product scanner device; output, via the communication controller, the acquired merchandise code to the store server device along with weight change information acquired from the weight sensor, a code acquisition time for the merchandise code, a weight acquisition time for the weight change information, and an indication the merchandise code was acquired for a merchandise registration event or a merchandise deregistration event; receive, via the communication controller, an inappropriate action notice from the store server device, the inappropriate action notice indicating an action type detected based on the output of the acquired merchandise code and the weight change information acquired from the weight sensor, the code acquisition time for the merchandise code, the weight acquisition time for the weight change information, and the indication the merchandise code was acquired for a merchandise registration event or a merchandise deregistration event; and generate a user notification in response to receiving the inappropriate action notice to output notice information to a user corresponding to the detected action type indicated by the inappropriate action notice.

In general, according to one embodiment, a merchandise registration device for a shopping cart according to an embodiment includes a merchandise identification information acquisition unit, a merchandise identification information output unit, a transaction identification information acquisition unit, a weight measurement unit, a weight information output unit, an inappropriate action information acquisition unit, and a notification generation unit. The merchandise identification information acquisition unit acquires merchandise identification information for specifying merchandise that a customer desires to purchase by a scanner provided on a shopping cart. The merchandise identification information output unit outputs, to an information processing device configured to perform registration of the merchandise and monitoring of a fraudulent action, information about either new registration or deregistration of merchandise, the merchandise identification information acquired by the merchandise identification information acquisition unit, a time when the merchandise identification information is acquired, and cart identification information for specifying the shopping cart in association with each other. The transaction identification information acquisition unit acquires, from the information processing device, transaction identification information for specifying one transaction dispensed by the information processing device. The weight measurement unit measures a total weight of an object stored in a storing portion of the shopping cart. The weight information output unit outputs, to the information processing device, the total weight, a time when the total weight is measured, and the cart identification information in association with each other. The inappropriate action information acquisition unit acquires, from the information processing device, information indicating that the inappropriate action occurs when the merchandise is registered, a content of the inappropriate action, and a degree of importance of the inappropriate action. The notification generation unit causes a display device provided in the cart terminal to light up or blink an indicator in a color corresponding to the degree of importance of the inappropriate action and to display the content of the inappropriate action.

The information processing device according to the embodiment includes a merchandise identification information acquisition unit, a merchandise registration unit, a transaction identification information dispensing unit, a weight information acquisition unit, an inappropriate action detection unit, a score assignment unit, a total score calculation unit, an inappropriate action information output unit, and a merchandise registration information output unit. The merchandise identification information acquisition unit acquires, from a merchandise registration device for a shopping cart that acquires merchandise identification information for specifying merchandise that a customer desires to purchase, the merchandise identification information, a time when the merchandise identification information is acquired, a time when the merchandise identification information which is acquired already, is removed, and cart identification information for specifying a shopping cart in association with each other. The merchandise registration unit generates merchandise registration information based on the merchandise identification information acquired by the merchandise identification information acquisition unit. The transaction identification information dispensing unit dispenses transaction identification information for specifying one transaction to a merchandise registration device for a shopping cart having the cart identification information. The weight information acquisition unit acquires, from the merchandise registration device for a shopping cart, a total weight of an object stored in a storing portion that is provided in the shopping cart and configured to allow the merchandise to be stored, a time when the total weight is measured, and the cart identification information in association with each other. The inappropriate action detection unit detects that the inappropriate action occurs at the time of merchandise registration and detects the content of the inappropriate action based on the merchandise identification information, the time when the merchandise identification information is acquired, the time when the merchandise identification information which is acquired already is removed, the time when the total weight of the storing portion increases or decreases beyond a predetermined value, and an increase or decrease amount of the total weight. The score assignment unit assigns a score according to the degree of importance of the inappropriate action detected by the inappropriate action detection unit. The total score calculation unit calculates a total score indicating an occurrence state of the inappropriate action occurring in a shopping cart having the same cart identification information during one transaction based on the score assigned by the score assignment unit. The inappropriate action information output unit outputs information indicating that the inappropriate action occurs, the content of the inappropriate action, and the degree of importance of the inappropriate action to the merchandise registration device for a shopping cart. The merchandise registration information output unit outputs the merchandise registration information and the total score to a settlement device that performs settlement related to the merchandise registered by the customer.

A settlement device according to the embodiment includes a transaction identification information acquisition unit, a transaction identification information output unit, a merchandise registration information acquisition unit, and a receipt dispensing unit. The transaction identification information acquisition unit acquires transaction identification information for specifying one transaction from the merchandise registration device for a shopping cart. The transaction identification information output unit outputs the transaction identification information acquired by the transaction identification information acquisition unit to an information processing device that performs registration of merchandise and monitoring of a fraudulent action. The merchandise registration information acquisition unit acquires, from the information processing device, merchandise registration information in which the merchandise identification information for specifying merchandise that the customer desires to purchase is registered, and a total score indicating an occurrence state of an inappropriate action occurring in a shopping cart provided with the merchandise registration device for a shopping cart during one transaction. The receipt dispensing unit prints and dispenses the merchandise registration information and the total score in a form readable only by the store clerk.

Hereinafter, an example embodiment will be described with reference to the drawings. The present disclosure is not limited to the example embodiment.

Hereinafter, a shopping monitoring system 10 according to an example embodiment of the present disclosure will be described with reference to the drawings. The present disclosure is not necessarily limited to the specific details of this example embodiment.

### (Schematic Configuration of Shopping Monitoring System)

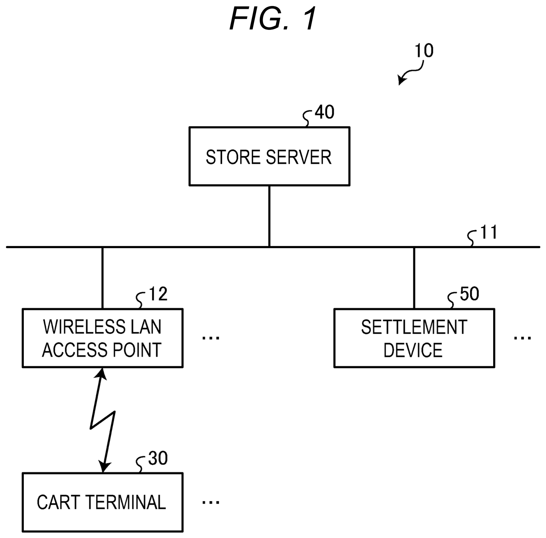

A schematic configuration of the shopping monitoring system 10 according to an embodiment will be described with reference to FIG. 1. FIG. 1 is a system configuration diagram illustrating an example of a system configuration of a shopping monitoring system 10.

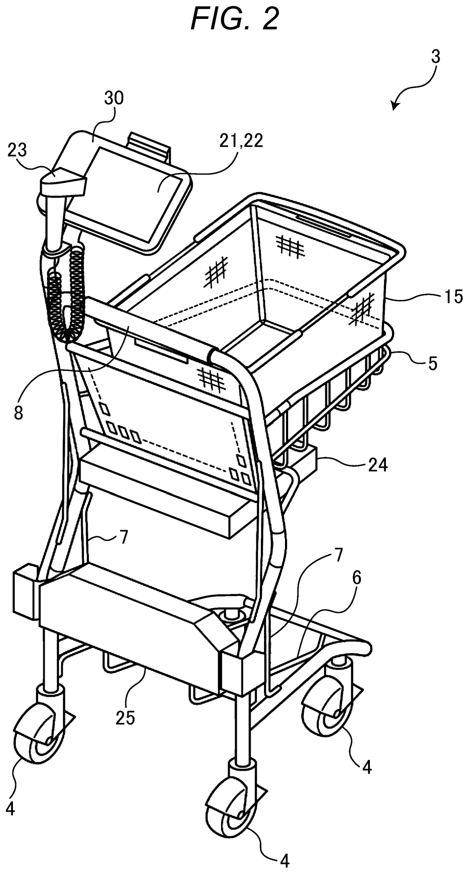

The shopping monitoring system 10 includes a store server 40, a cart terminal 30, and a settlement device 50 that are connected to each other by an in-store network 11. The cart terminal 30 is provided on a shopping cart 3 (see FIG. 2) and wirelessly communicates with the store server 40 via a wireless local area network (LAN) access point 12. In general, total number of cart terminals 30 and settlement devices 50 can be set according to the scale of the store. Similarly, a plurality of wireless LAN access points 12 can be provided in the store to permit wireless communication with the cart terminal 30 anywhere within the store.

In the shopping monitoring system 10 merchandise registration is performed when a customer causes a code symbol, such as a barcode attached to merchandise, to be read at the cart terminal 30 as the customer performs shopping while pushing the shopping cart 3 around the store. The shopping monitoring system 10 detects that the customer performs an inappropriate action at the time of a merchandise registration. An inappropriate action can be, for example, storing merchandise different from that corresponding to a read barcode in the shopping basket of the shopping cart 3. When an inappropriate action is detected, the shopping monitoring system 10 causes a pop-up display for notification to the customer to be displayed on a screen of the cart terminal 30 to cause the customer to perform a recovery operation to reverse or otherwise correct the inappropriate action. The shopping monitoring system 10 also calculates a score for the inappropriate action according to the type of the inappropriate action performed by the customer and a total score (overall transaction score) related to the inappropriate action(s) performed by the customer during the same transaction. The shopping monitoring system 10 performs the settlement processing for paying the price of the merchandise registered by the customer in the transaction. At settlement time, the shopping monitoring system 10 may print the calculated total score (overall transaction score) on a printed receipt for the transaction. A store clerk may then check the total score printed on the receipt and determine whether to perform a content check (transaction detail confirmation) regarding the merchandise purchased by the customer according to the total score. The store clerk may thus focus content checks more efficiently to prevent damage (loss) to the store.

The cart terminal 30 acquires merchandise identification information (for example, a merchandise ID or a merchandise code) registered in a product code symbol, such as the barcode attached to the merchandise that the customer desires to purchase. The cart terminal 30 outputs the acquired merchandise identification information to the store server 40 in association with cart identification information (a cart terminal ID) for uniquely specifying the shopping cart 3 on which the cart terminal 30 is provided. The cart terminal 30 also measures a weight of objects stored in or on the shopping cart 3, and outputs the weight to the store server 40 together with a measurement time. When the customer performs an inappropriate action during merchandise registration, the cart terminal 30 receives an instruction from the store server 40 and performs a pop-up display to cause a notification to be generated on a display of the cart terminal 30. When the customer completes registration of all merchandise and intends to perform settlement (payment), the cart terminal 30 displays a code symbol for specifying the transaction. The cart terminal 30 is an example of a merchandise registration device for a shopping cart in the present disclosure.

The store server 40 acquires, from the cart terminal 30, the cart terminal ID, the merchandise identification information corresponding to the registered merchandise in the transaction, and a total weight and the measurement time for objects stored in a shopping basket 15 of the shopping cart 3. The store server 40 also acquires, from the cart terminal 30, information indicating whether additional items were registered then deregistered or the like. The store server 40 updates a content of a merchandise registration file stored therein by collating the merchandise identification information to a merchandise master (product/item information associated with a product/commodity code). The store server 40 dispenses a transaction code to the cart terminal 30. The transaction code uniquely identifies the transaction in the system. The store server 40 detects (identifies) whether the customer performs an inappropriate action and causes the cart terminal 30 to perform a pop-up display according to the detection of an inappropriate action. When the detected inappropriate action is not corrected, the store server 40 assigns a score according to the content of the inappropriate action and cumulatively tracks the score within the same transaction. When the settlement device 50 instructs the store server 40 to perform settlement, the store server 40 outputs a merchandise registration file matching the instructed transaction code. The cumulative value of the score of the inappropriate actions is also output to the settlement device 50 at this time. The store server 40 is an example of an information processing device in the present disclosure.

In the present example, the settlement device 50 is of a type in which the store clerk and the customer face each other. The settlement device 50 performs payment processing for the transaction corresponding to the transaction code according to a payment method selected by the customer. The settlement device 50 prints the cumulative value of the score of the inappropriate action on a receipt on which a payment result is printed. The store clerk checks the cumulative value of the score of the inappropriate action, and may decide to check that the merchandise being carried out by the customer matches the printed content on the receipt according to the cumulative value. Alternatively, the method used for checking of the merchandise may be varied according to the cumulative score for the transaction.

The functional divisions between each unit in the shopping monitoring system 10 is not limited to the above example, and details of the functional divisions may be appropriately varied.

### (Schematic Configuration of Shopping Cart)

A schematic configuration of the shopping cart 3 provided in the shopping monitoring system 10 will be described with reference to FIG. 2. FIG. 2 is an external view illustrating an example of a shopping cart 3 provided in the shopping monitoring system 10 according to the embodiment.

The shopping cart 3 includes four freely rotatable casters 4 on a bottom. The customer generally holds a handle 8 provided on an upper side of the shopping cart 3 and pushes the shopping cart 3 while changing an orientation thereof to the left and right.

An upper basket receiving frame 5 is provided on the upper side of the shopping cart 3. The shopping basket 15 (a storing portion) in which the merchandise can be stored when the customer performs shopping may be placed in the upper basket receiving frame 5.

A lower basket receiving frame 6 is provided on a lower side of the shopping cart 3. Although not specifically illustrated, a shopping basket 15 may be also placed in the lower basket receiving frame 6.

The shopping cart 3 further includes a cart terminal 30, a display 21, a touch panel 22, a hand scanner 23, a weight sensor 24, and a battery 25.

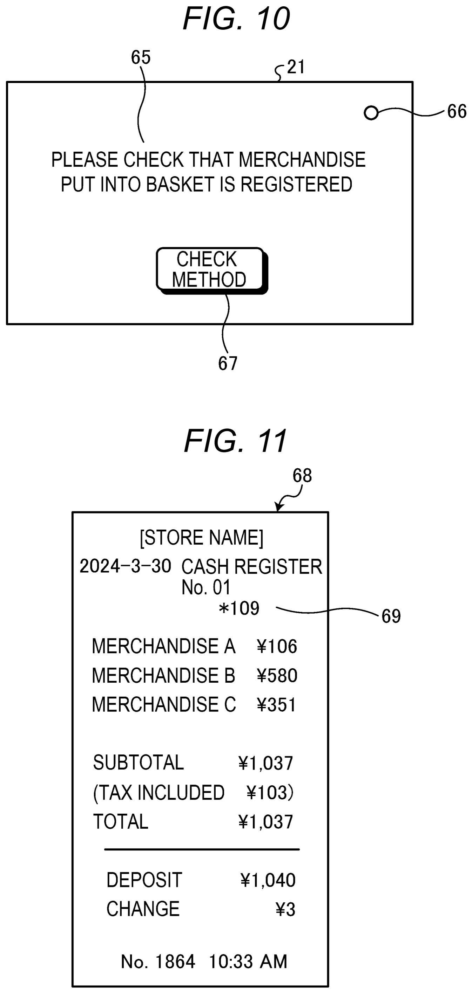

By performing wireless communication with the store server 40, the cart terminal 30 instructs the store server 40 to register merchandise that the customer desires to purchase and to deregister merchandise which was already registered. When the customer performs an inappropriate action, the cart terminal 30 receives an instruction from the store server 40 and performs a pop-up display. A specific example of a pop-up display is shown in FIG. 10.

The display 21 displays various types of information related to the merchandise registration process and performs the pop-up display related to an inappropriate action of the customer. The display 21 is, for example, a liquid crystal panel or an organic electroluminescence (EL) panel.

The touch panel 22 is stacked on the display 21, and acquires operation information from the customer by touch selections of the various operation buttons displayed on the display 21. Specifically, the touch panel 22 acquires an instruction to start shopping, an instruction to deregister merchandise, a settlement instruction (settlement request), and the like from the customer.

The hand scanner 23 can be held by the customer to read a code symbol, such as a barcode, by light output by the hand scanner 23 to acquire the merchandise identification information from the merchandise that the customer desires to purchase.

The weight sensor 24 is provided on a bottom surface of the upper basket receiving frame 5 and measures the weight applied to the upper basket receiving frame 5. In the present embodiment, the weight sensor 24 measures a total weight of the shopping basket 15 and objects stored in the shopping basket 15. The weight sensor 24 is, for example, a strain gauge. The upper basket receiving frame 5 and the lower basket receiving frame 6 are connected by a pair of suspension frames 7. The weight sensor 24 may measure a total value of the weight applied to the upper basket receiving frame 5 and the weight applied to the lower basket receiving frame 6.

The battery 25 supplies power to the cart terminal 30, the display 21, the touch panel 22, the hand scanner 23, and the weight sensor 24.

### (Hardware Configuration of Shopping Cart)

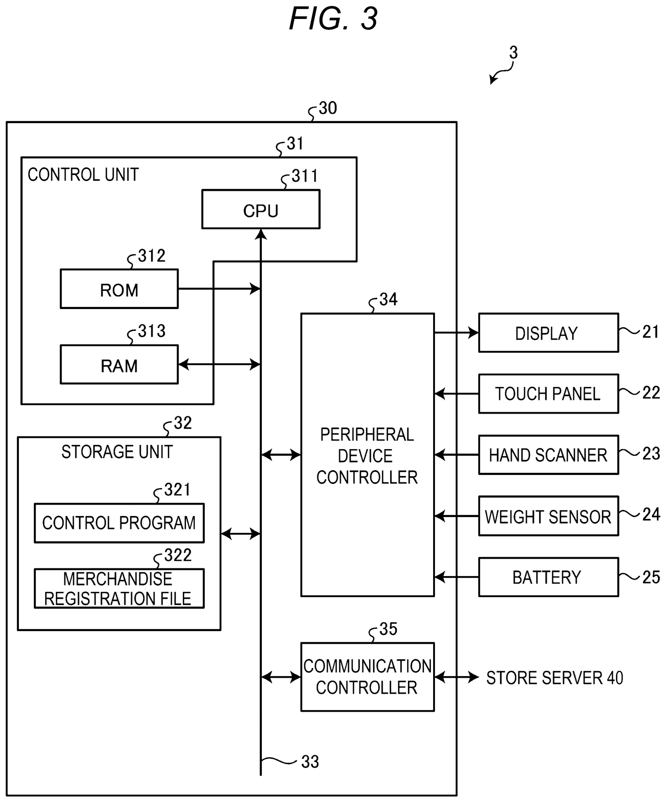

A hardware configuration of the shopping cart 3 will be described with reference to FIG. 3. FIG. 3 is a hardware block diagram illustrating an example of a hardware configuration of the shopping cart 3 provided in the shopping monitoring system 10 according to the embodiment.

The cart terminal 30 is mounted on or integrated with the shopping cart 3. The cart terminal 30 has a control unit 31, a storage unit 32, a peripheral device controller 34, and a communication controller 35 that are connected to each other via an internal bus 33.

The control unit 31 controls overall operations of the cart terminal 30. The control unit 31 includes a central processing unit (CPU) 311, a read only memory (ROM) 312, and a random access memory (RAM) 313. The CPU 311 is connected to the ROM 312 and the RAM 313 via an internal bus, such as an address bus or a data bus. The CPU 311 loads various programs stored in the ROM 312 or the storage unit 32 into the RAM 313. The CPU 311 controls operations of the cart terminal 30 by operating according to the various programs loaded in the RAM 313. That is, the control unit 31 has a configuration of a general computer.

The storage unit 32 is a storage device such as a hard disk drive (HDD) or a solid-state drive (SSD). The storage unit 32 may be a nonvolatile memory, such as a flash memory, in which stored information is maintained even when power is turned off. The storage unit 32 stores a control program 321 and a merchandise registration file 322.

The control program 321 is a software program for controlling the operations of the cart terminal 30. The control program 321 may be stored in the storage unit 32 or may be recorded in a non-transitory computer-readable recording medium such as a CD-ROM, a flexible disk (FD), a CD-R, or a DVD in an installable or executable file. The control program 321 may be stored in a computer connected to a network and then downloaded via the network. In some examples, the control program 321 may be provided or distributed across a network such as the Internet.

The merchandise registration file 322 is a file in which the merchandise information registered by the cart terminal 30 is stored. The merchandise registration file 322 stores the registered merchandise information (for example, a merchandise ID, a merchandise name, the number of merchandise being purchased, and a unit price) and a total purchase amount (transaction total). The merchandise registration file 322 is generated by the store server 40. The merchandise registration file 322 is updated each time new merchandise is registered by the customer. The merchandise registration file 322 is also updated any time merchandise that was previously registered in the transaction is deregistered (that is, removed/cancelled from the transaction). The merchandise registration file 322 can be transmitted to the cart terminal 30.

The control unit 31 is connected to the display 21, the touch panel 22, the hand scanner 23, the weight sensor 24, and the battery 25, which can be referred to as peripheral devices, via the peripheral device controller 34. Since the basics of each of these peripheral devices is as described above, additional description thereof will be omitted.

The control unit 31 receives and transmits various types of information from and to the store server 40 via the communication controller 35.

### (Hardware Configuration of Store Server)

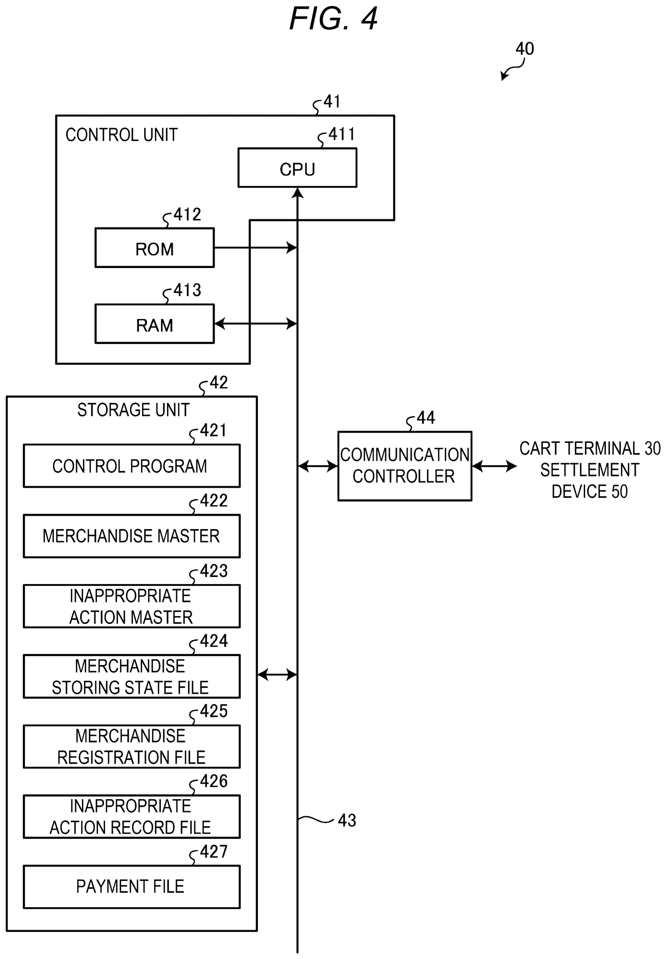

A hardware configuration of the store server 40 will be described with reference to FIG. 4. FIG. 4 is a hardware block diagram illustrating an example of a hardware configuration of the store server provided in the shopping monitoring system 10 according to the embodiment.

The store server 40 has a configuration in which a control unit 41, a storage unit 42, and a communication controller 44 are connected to each other by an internal bus 43.

The control unit 41 controls operations of the entire store server 40. The control unit 41 includes a CPU 411, a ROM 412, and a RAM 413. The CPU 411 is connected to the ROM 412 and the RAM 413 via an internal bus, such as an address bus or a data bus. The CPU 411 loads various programs stored in the ROM 412 or the storage unit 42 in the RAM 413. The CPU 411 controls the operations of the store server 40 by operating according to the various programs loaded in the RAM 413. That is, the control unit 41 has a configuration of a general computer.

The storage unit 42 is a storage device such as an HDD or an SSD. The storage unit 42 may be a nonvolatile memory, such as a flash memory, in which stored information is maintained even when power is turned off. The storage unit 42 stores a control program 421, a merchandise master 422, an inappropriate action master 423, a merchandise storing state file 424, a merchandise registration file 425, an inappropriate action record file 426, and a payment file 427.

The control program 421 is a program for controlling the operations of the entire store server 40. The control program 421 may be stored in the storage unit 42 or may be recorded in a non-transitory computer-readable recording medium, such as a CD-ROM, a flexible disk (FD), a CD-R, or a DVD, in an installable or executable file. The control program 421 may be provided by being stored in a computer connected to a network and downloaded via the network. The control program 421 may be provided or distributed via a network such as the Internet.

The merchandise master 422 is a master file in which information such as a merchandise name, a weight, and a price is stored in association with the merchandise identification information (for example, a merchandise code). The store server 40 specifies the merchandise to be registered or the merchandise to be deregistered by collating the merchandise code acquired from the cart terminal 30 with the merchandise master 422.

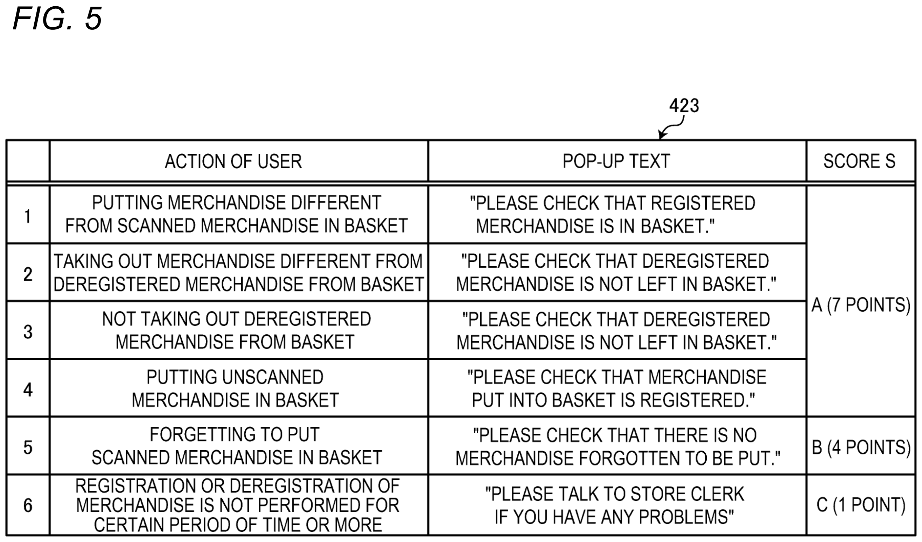

The inappropriate action master 423 is a master file in which the inappropriate action at the time of merchandise registration that can be detected by the shopping monitoring system 10 is stored. The inappropriate action master 423 stores the content of the inappropriate action, a pop-up text displayed on the display 21 of the cart terminal 30 when the inappropriate action is detected, and a score S (see FIG. 5) assigned to the inappropriate action according to the content of the inappropriate action. A data structure of the inappropriate action master 423 is shown in FIG. 5.

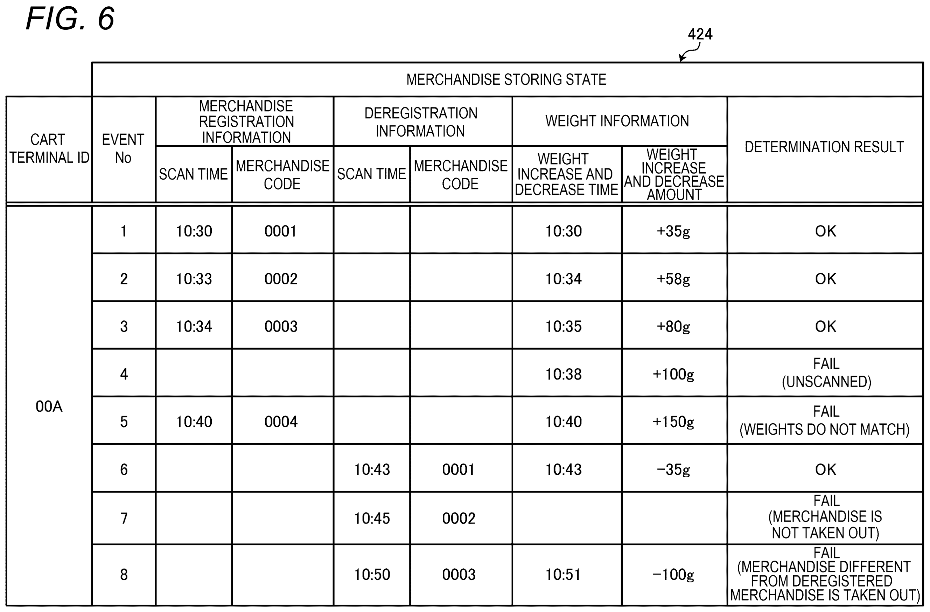

The merchandise storing state file 424 is a file in which an instruction of merchandise registration or deregistration, the merchandise code and an acquisition time thereof, an increase and decrease amount of the weight detected by the weight sensor 24 and the measurement time thereof, and a determination result of whether the action is inappropriate, which are output from the cart terminal 30 are stored in association with the cart terminal ID for uniquely specifying the cart terminal 30. A data structure of the merchandise storing state file 424 is shown in FIG. 6.

The merchandise registration file 425 is a file in which the registered merchandise information (for example, a merchandise code, a merchandise name, the number of merchandise, and a unit price) and the total purchase amount are stored in association with the transaction code for specifying one transaction. The store server 40 updates a content of the merchandise registration file 425 and outputs the updated merchandise registration file 425 to the cart terminal 30 each time new merchandise is registered and each time the merchandise that is already registered is deregistered.

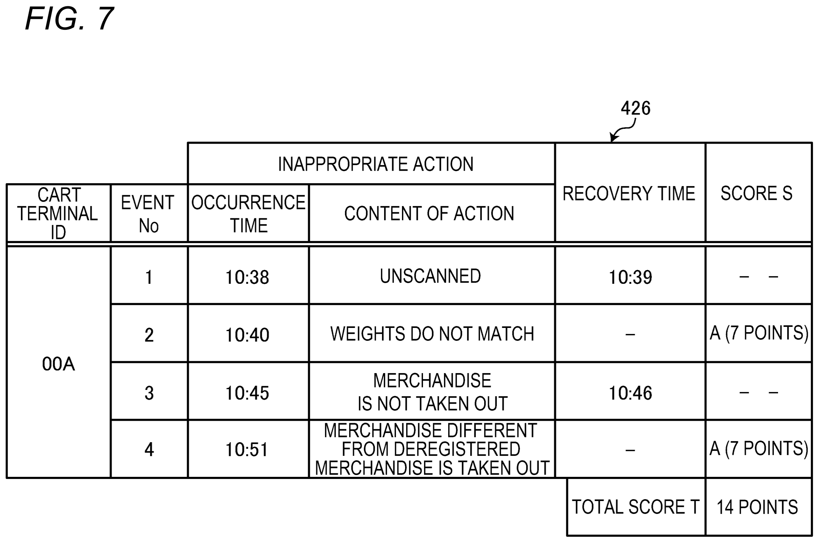

The inappropriate action record file 426 is a file in which the type and an occurrence time of the inappropriate action, a time when the inappropriate action is recovered (corrected), the score S associated with the inappropriate action, and a total score T that is a sum of the scores S of the detected inappropriate actions in the same transaction are stored in association with a cart terminal ID for uniquely specifying the cart terminal 30. A data structure of the inappropriate action record file 426 is shown in FIG. 7.

The payment file 427 is a file in which a content of the payment performed by the settlement device 50, for example, a payment method, a payment time, a payment amount, and a breakdown thereof is stored. The store server 40 acquires the payment file 427 from the settlement device 50 each time payment is performed or every predetermined time.

The control unit 41 receives and transmits the various types of information from and to the cart terminal 30 and the settlement device 50 via the communication controller 44.

### (Data Structure of Inappropriate Action Master)

A data structure of the inappropriate action master 423 stored in the store server 40 will be described with reference to FIG. 5.

The inappropriate action master 423 stores the information associated with different types of inappropriate action, the pop-up text to be displayed on the display 21 of the cart terminal 30 when the inappropriate action is detected, and the score S associated with the inappropriate action type.

In this example, the inappropriate action master 423 stores information related to six types of inappropriate actions as illustrated in FIG. 5.

A first example of the inappropriate action is "putting merchandise different from the scanned merchandise in the shopping basket". Based on information recorded in the merchandise storing state file 424 acquired from the cart terminal 30, the store server 40 detects that such an action occurs when the weight of the merchandise scanned by the hand scanner 23 does not match the weight increase of the shopping basket 15 within a predetermined time after the scanning.

When such an inappropriate action occurs, the store server 40 causes the cart terminal 30 to display a pop-up text "Please check that the registered merchandise is in the basket".

It is considered here that store losses associated with this action are substantial therefore, the highest rank A (7 points) is assigned as the score S for this action.

In general, the customer checks the pop-up display of the cart terminal 30, takes out the incorrect merchandise put in the basket without scanning, and replaces the removed merchandise with the merchandise that was actually scanned to recover from the inappropriate action. Based on the information recorded in the merchandise storing state file 424, the store server 40 recognizes that such an action occurs, and also checks that recovery is performed.

A second example of the inappropriate action is "taking out merchandise different from the deregistered merchandise from the shopping basket". Based on the information recorded in the merchandise storing state file 424 acquired from the cart terminal 30, the store server 40 detects that such an action occurs when a weight decrease amount of the shopping basket 15 does not match a weight of the merchandise scanned by the hand scanner 23 for the deregistration.

When such an action occurs, the store server 40 causes the cart terminal 30 to display a pop-up "Please check that the deregistered merchandise is not left in the basket".

This inappropriate action is assigned a score S in the highest rank A (7 points).

In general, the customer checks the pop-up display of the cart terminal 30, takes out the deregistered merchandise from the shopping basket 15, and returns the previously removed merchandise to the shopping basket 15 to recover from the inappropriate action. Based on the information recorded in the merchandise storing state file 424, the store server 40 recognizes that such an action occurs, and checks that recovery is performed.

A third example of the inappropriate action is "not taking out the deregistered merchandise from the shopping basket". Based on the information recorded in the merchandise storing state file 424 acquired from the cart terminal 30, the store server 40 detects that such an action occurs when the weight of the shopping basket 15 does not change after a scanning for deregistration is performed.

When such an action occurs, the store server 40 causes the cart terminal 30 to display a pop-up "Please check that the deregistered merchandise is not left in the basket".

This inappropriate action is assigned a score S in the highest rank A (7 points).

In general, the customer checks the pop-up display of the cart terminal 30, and takes out the deregistered merchandise from the shopping basket 15 to recover from the inappropriate action. Based on the information recorded in the merchandise storing state file 424, the store server 40 recognizes that such an action occurs, and checks that recovery is performed.

A fourth example of the inappropriate action is "putting unscanned merchandise in the shopping basket". Based on the information recorded in the merchandise storing state file 424 acquired from the cart terminal 30, the store server 40 detects that such an action occurs when the weight of the shopping basket 15 increases without a scanning for registration being performed.

When such an action occurs, the store server 40 causes the cart terminal 30 to display a pop-up "Please check that merchandise put into the basket is registered".

This inappropriate action is assigned a score S in the highest rank A (7 points).

In general, the customer checks the pop-up display of the cart terminal 30, takes out the unscanned merchandise stored in the shopping basket 15, performs scanning for registration, and places the now scanned merchandise in the shopping basket 15 to recover from the inappropriate action. Based on the information recorded in the merchandise storing state file 424, the store server 40 recognizes that such an action occurs, and checks that recovery is performed.

A fifth example of the inappropriate action is "forgetting to put the scanned merchandise in the shopping basket". Based on the information recorded in the merchandise storing state file 424 acquired from the cart terminal 30, the store server 40 detects that such an action occurs when the weight of the shopping basket 15 does not increase after some predetermined time elapses after a scanning of merchandise is performed by the hand scanner 23.

When such an action occurs, the store server 40 causes the cart terminal 30 to display a pop-up "Please check that there is no merchandise forgotten to be put".

When such an action occurs, it is considered that while the store does not necessarily experience a direct loss, the customer mistake may ultimately interfere with a normal sales transaction processing, and therefore, a score S of the second highest rank B(4 points) is assigned to this action.

In general, the customer checks the pop-up display of the cart terminal 30, places the registered merchandise that was not previously placed in the shopping basket 15 into the shopping basket 15 to recover from this inappropriate action. Based on the information recorded in the merchandise storing state file 424, the store server 40 recognizes that such an action occurs, and checks that recovery is performed.

A sixth example of the inappropriate action "registration or deregistration of merchandise is not performed for a certain period of time or more". When no scanning action occurs with the cart terminal 30 and the weight of the shopping basket 15 does not change for over some predetermined elapse of time or more, the store server 40 detects that such an action (a timeout action) occurs.

When such an action occurs, the store server 40 causes the cart terminal 30 to display a pop-up "Please talk to the store clerk If you have any problems".

When such an action occurs, it is considered that the store does not experience merchandise loss, but the action may indicate inexperience or carelessness of the customer, and therefore, the score S of the lowest rank C(1 point) is assigned to this action.

In general, the customer checks the pop-up display of the cart terminal 30 and then consults with a nearby store clerk if having a problem.

The possible inappropriate actions registered in the inappropriate action master 423 are not limited to the above six types. For example, an action of "scanning only one merchandise but putting a plurality of merchandise in the shopping basket when purchasing a plurality of the same merchandise" may be included in the inappropriate action master 423.

### (Structure of Merchandise Storing State File)

The data structure of the merchandise storing state file 424 will be described with reference to FIG. 6. FIG. 6 is a diagram illustrating an example of a data structure of the merchandise storing state file stored in the store server.

The merchandise storing state file 424 is a file in which a merchandise storing state is stored in association with the cart terminal ID. In this context, merchandise storing information includes merchandise registration information, deregistration information, weight information, and a determination result.

The merchandise registration information includes a time when the barcode of an item is scanned by the hand scanner 23 for merchandise registration and the merchandise code that is read/obtained from the barcode.

The deregistration information includes a time when the barcode of an item scanned by the hand scanner 23 to deregister a previously registered item and the merchandise code read/obtained from the barcode. For performing a merchandise deregistration, the customer presses a deregistration button or the like displayed on the display 21 of the cart terminal 30 and then scans the barcode of the item desired to be deregistered.

The weight information includes the time when a total weight measured by the weight sensor 24 increases or decreases beyond a predetermined threshold value and the increase or decrease amount in weight at that time. That is, the weight information indicates the time when the customer stores the merchandise in the shopping basket 15 and the weight of the stored merchandise, or the time when the customer takes out merchandise from the shopping basket 15 and the weight of the taken-out merchandise. The predetermined threshold value for weight changes can be appropriately set in consideration of, for example, the weight of the lightest merchandise item available at the store.

The determination result is information indicating whether an inappropriate action occurs (OK: there is no inappropriate action; FAIL: there is an inappropriate action) and the content (e.g., a type or description) of the inappropriate action. In this example, the inappropriate actions to be detected are action types registered in the inappropriate action master 423. A detection method for each inappropriate action type is also as described above.

The store server 40 acquires information of the merchandise storing state file 424 from the cart terminal 30 and continues to update the content of the merchandise storing state file 424 until the merchandise registration is completed.

### (Data Structure of Inappropriate Action Record File)

The data structure of the inappropriate action record file 426 will be described with reference to FIG. 7. FIG. 7 is a diagram illustrating an example of a data structure of an inappropriate action record file stored in the store server.

The inappropriate action record file 426 is a file in which an occurrence time of the inappropriate action and the content of the inappropriate action, a time when the inappropriate action is recovered, the score S of the inappropriate action, and the total score T are stored in association with the cart terminal ID.

The occurrence time of the inappropriate action is the time at which the determination result recorded in the merchandise storing state file 424 is listed as fail.

The "content of the inappropriate action" indicates which one of the action types registered in the inappropriate action master 423 the inappropriate action corresponds to.

A recovery time is the time at which the inappropriate action is recovered (e.g., resolved or corrected). A recovery time can be determined based on the information recorded in the merchandise storing state file 424, for example.

The score S is a point value or the like set according to the inappropriate action type.

The total score T is a sum of the scores S assigned to the inappropriate actions that occur during the same transaction.

### (Hardware Configuration of Settlement Device)

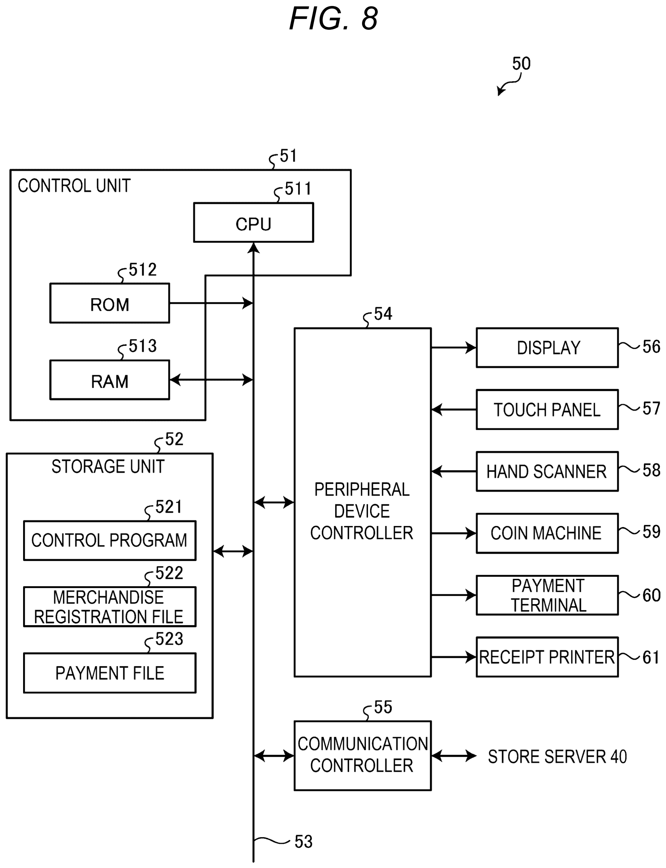

A hardware configuration of the settlement device 50 will be described with reference to FIG. 8. FIG. 8 is a hardware block diagram illustrating an example of a hardware configuration of a settlement device 50 provided in the shopping monitoring system 10 according to the embodiment.

The settlement device 50 has a control unit 51, a storage unit 52, a peripheral device controller 54, and a communication controller 55 that are connected via an internal bus 53.

The control unit 51 controls overall operations of the settlement device 50. The control unit 51 includes a CPU 511, a ROM 512, and a RAM 513. The CPU 511 is connected to the ROM 512 and the RAM 513 via an internal bus such as an address bus or a data bus. The CPU 511 loads various programs stored in the ROM 512 or the storage unit 52 into the RAM 513. The CPU 511 controls the operations of the settlement device 50 by operating according to the various programs loaded into the RAM 513. That is, the control unit 51 has a configuration of a general computer.

The storage unit 52 is a storage device such as an HDD or an SSD. The storage unit 52 may be a nonvolatile memory such as a flash memory in which stored information is maintained even when power is turned off. The storage unit 52 stores a control program 521, a merchandise registration file 522, and a payment file 523.

The control program 521 is a software program for controlling the operations of the settlement device 50. The control program 521 may be stored in the storage unit 52 or may be recorded in a non-transitory computer-readable recording medium such as a CD-ROM, a flexible disk (FD), a CD-R, or a DVD in an installable or executable file. The control program 521 may be provided by being stored in a computer connected to a network and downloaded via the network. The control program 521 may be provided or distributed across a network such as the Internet.

The merchandise registration file 522 is a file including the merchandise registration information associated with the transaction code displayed on the display 21 of the cart terminal 30 of the customer who performs settlement with the settlement device 50. The settlement device 50 acquires the merchandise registration information corresponding to the transaction code designated by the settlement device 50 from the merchandise registration file 425 generated by the store server 40, and sets the merchandise registration information as the merchandise registration file 522.

The payment file 523 is a file in which details of the payment performed at the settlement device 50, for example, a payment method, a payment time, a payment amount, and a breakdown thereof is stored.

The control unit 51 is connected to a display 56, a touch panel 57, a hand scanner 58, a coin machine 59, a payment terminal 60, and a receipt printer 61, which are peripheral devices, via the peripheral device controller 54.

The display 56 displays various information about the settlement processing to the customer and the store clerk. The display 56 is, for example, a liquid crystal panel or an organic EL panel. The settlement device 50 in some examples may include a plurality of displays (e.g., a display for the store clerk and a display for the customer).

The touch panel 57 is stacked on the display 56, and acquires operation information from the store clerk or the customer according to selections of various operation buttons displayed on the display 56. Specifically, the touch panel 57 acquires a deregistration instruction for removing a previously registered item merchandise from a transaction, selection information indicating the payment method, status information regarding a payment execution, and the like by operations of the store clerk or the customer.

The hand scanner 58 reads a code symbol, such as a barcode, including the transaction code displayed on the display 21 of the cart terminal 30.

When the customer chooses to pay in cash, the coin machine 59 counts the amount of bills or coins inserted by the customer. The coin machine 59 dispenses, as bills or coins, change due calculated by subtracting the payment amount required from the total amount of the bills or coins inserted by the customer.

When the customer selects cashless payment, the payment terminal 60 performs payment processing according to an instructed payment method (e.g., credit payment, code payment, voucher payment, electronic money payment, or the like).

The receipt printer 61 prints and dispenses a summary of the payment processing as a receipt. Additional aspects of the receipt dispensed by the settlement device 50 will be described below (see FIG. 11).

The control unit 51 receives and transmits the various types of information from and to the store server 40 via the communication controller 55.

### (Flow of Information in Shopping Monitoring System)

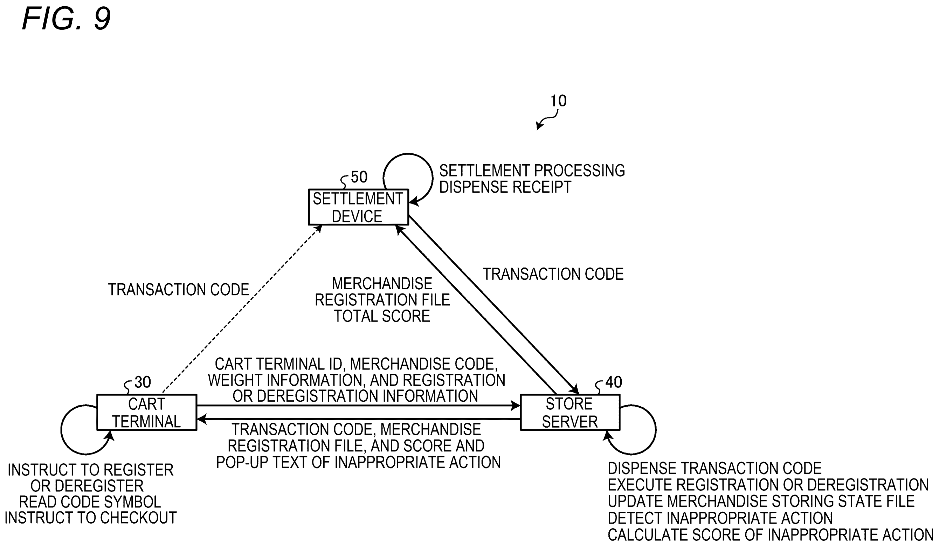

A flow of information between the elements in the shopping monitoring system 10 according to the embodiment will be described with reference to FIG. 9. FIG. 9 provides an example of a flow of information in the shopping monitoring system 10 according to the embodiment.

The cart terminal 30 receives a registration instruction or a deregistration instruction according to a shopping action of the customer. Then, the cart terminal 30 causes or permits the hand scanner 23 to read a code symbol, such as a barcode attached to the merchandise. The cart terminal 30 receives a settlement instruction from the customer when the shopping is ended.

Each time the hand scanner 23 reads a code symbol, the cart terminal 30 outputs the registration instruction or the deregistration instruction and the merchandise code read from the code symbol by the hand scanner 23 to the store server 40. The cart terminal 30 further outputs the total weight measured by the weight sensor 24 and the weight information indicating the measurement time to the store server 40. The weight information is output in association with the cart terminal ID. A time when the code symbol is read can also be output to the store server 40.

When receiving an instruction to start shopping from the cart terminal 30, the store server 40 dispenses a transaction code associated with the cart terminal ID. The store server 40 updates the content of the merchandise registration file 425 (see FIG. 4) in response to a registration instruction or a deregistration instruction. The store server 40 reflects the merchandise registration information, merchandise release information, and the weight information acquired from the cart terminal in the merchandise storing state file 424. The store server 40 is configured to detect an inappropriate action of the customer during merchandise registrations. One specific detection method is as described above. The store server 40 further assigns a score S as defined by the inappropriate action master 423 to any detected inappropriate action.

The store server 40 outputs the transaction code to the cart terminal 30. The store server 40 outputs the content in the merchandise registration file 425 corresponding to the cart terminal ID to the cart terminal 30 matching the cart terminal ID. The store server 40 further outputs the score S related to the inappropriate action and the pop-up text to be displayed on the display 21 of the cart terminal 30. In some examples, the store server 40 may cause the display of the pop-up text to occur on the display 56 of the settlement device 50 when the customer is performing settlement at the settlement device 50.

When the shopping is ended, the customer operates the touch panel 22 of the cart terminal 30 to instruct execution of the settlement processing for paying for the registered merchandise. When the settlement is instructed, the cart terminal 30 displays a generated code symbol (such as a barcode or a two-dimensional code) in which the transaction code is encoded on the display 21.

The customer or the store clerk who operates the settlement device 50 reads the displayed code symbol from the display 21 of the cart terminal 30 with the hand scanner 58. Accordingly, the settlement device 50 can acquire the transaction code of the transaction to be settled. Since the reading of the transaction code can be performed by the customer or the store clerk operating the hand scanner 58, the reading is represented by a dotted line in FIG. 9.

The settlement device 50 outputs the just read transaction code to the store server 40. When there are a plurality of settlement devices 50, the settlement device 50 outputs a settlement device ID for specifying itself along with the transaction code to the store server 40.

The store server 40 outputs the content in the merchandise registration file 425 corresponding to the transaction code and the total score T (cumulative inappropriate action score) of the transaction to the settlement device 50.

After acquiring the merchandise registration information and the total score T from the store server 40, the settlement device 50 performs the settlement processing by a payment method designated by the customer. The settlement device 50 dispenses a receipt 68 (see FIG. 11) on which information about the purchased merchandise and the total score T relating to the detected inappropriate action(s) are printed. After the store clerk checks the total score T printed on the receipt, the store clerk compares the merchandise purchased by the customer to the printed content of the receipt 68. The checking/collating method utilized by the store clerk can be set or adjusted according to the total score T.

### (Pop-up Display Displayed on Cart Terminal)

FIG. 10 is a diagram illustrating an example of a pop-up display displayed on the cart terminal 30 when an inappropriate action is detected.

When it is detected that the customer performs an inappropriate action during a merchandise registration, the cart terminal 30 performs the pop-up display illustrated in FIG. 10 on the display 21 of the cart terminal 30. The pop-up display includes a pop-up text 65, an indicator 66, and a check method button 67.

The pop-up text 65 is a text corresponding to the type of the inappropriate action. The pop-up text 65 can be as registered in the inappropriate action master 423 (see FIG. 5) described above.

The indicator 66 lights up or blinks in a color corresponding to a degree of importance of the inappropriate action. In this example, the degree of importance corresponds to the score S associated with the inappropriate action type as described above. For example, when an inappropriate action of the highest rank A (7 points) is detected, the indicator 66 lights up or blinks in red. When the inappropriate action of the second highest rank B (4 points) is detected, the indicator 66 lights up or blinks in green. When an inappropriate action of the lowest C rank (1 point) is detected, the indicator 66 lights up or blinks in blue. In this way, by generating a notification by using the indicator 66, notifications can be generated for the customer without requiring the customer to read the pop-up text 65. In particular, it is considered possible to motivate a customer who intentionally performs an inappropriate action to perform a recovery/correction in view of the notification/warning provided.

The check method button 67 can be pressed to provide guidance for the recovery method related to the inappropriate action. After the check method button 67 is pressed, instructions or the like for the appropriate recovery method corresponding the detected inappropriate action is displayed on the display 21.

### (Receipt Dispensed by Settlement Device)

The receipt 68 dispensed by the settlement device 50 will be described with reference to FIG. 11.

The settlement device 50 dispenses a receipt 68 on which the details of the transaction are printed by the receipt printer 61. When a cash payment is performed, as illustrated in FIG. 11, a list of the purchased merchandise, a total amount due, an initial deposit amount (amount tendered), a change amount (change due), and the like are printed on the receipt 68. When a cashless payment is performed, information indicating the list of the purchased merchandise, a total amount due, a payment method, and the like are printed on the receipt 68.

A numerical value 69 is also printed on the receipt 68. The numerical value 69 can be a one-to-one match to the total score T (e.g., a sum of the scores S assigned to detected inappropriate actions) or can be a scaled grading value or an encoded value. For example, when the total score T is 7 points or greater, "109" can be printed as the numerical value 69. When the total score T is in range of 3 to 6 points, "245" can be printed as the numerical value 69. When the total score T is 1 or 2 points, "398" can be printed as the numerical value 69. For example, the store clerk memorizes a correspondence relationship between the total score T and the numerical value 69 or is otherwise provided with such a correspondence relationship

The numerical values 69 associated with the total score T ranges are preferably changed periodically to avoid customers identifying the meaning. In some examples, a character, text, or a symbol may be printed instead of the numerical value 69.

The store clerk checks the numerical value 69 printed on the receipt 68, then checks the merchandise purchased by the customer against the content printed on the receipt 68. The method or manner of checking by the store clerk can be set according to the value of the numerical value 69.

For example, when "109" is printed as the numerical value 69 to indicate the total score T is 7 points or greater, the store clerk more carefully compares the merchandise purchased (that is, the merchandise about to be carried out) by the customer to the content printed on the receipt 68.

When "245" is printed as the numerical value 69 to indicate the total score T is 3 to 6 points, the store clerk may, for example, pick up several items of merchandise being purchased by the customer and to compare these items to the content printed on the receipt 68. That is, the store clerk performs a "spot check" or the like rather than a full check or review.

When "398" is printed as the numerical value 69 to indicate the total score T is 1 or 2 points, the store clerk may perform just a simple visual or brief collation between the merchandise purchased by the customer and the content printed on the receipt 68. A simple collation may be performed, for example, by checking whether there is a large or obvious difference between the number of items purchased and the total number of items printed on the receipt 68.

In this way, since the numerical value 69 printed on the receipt 68 is in a format only by the store clerk can readily decipher or understand, the store clerk can understand the likelihood that inappropriate actions were performed by the customer without the customer knowing this. This use of an encoded or the like numerical value 69 permits the store clerk to more appropriately check the merchandise being purchased by the customer in view of the detections of one or more inappropriate actions.

Here, an example in which check of the merchandise purchased by the customer is performed after the settlement has been completed and a receipt has been dispensed is described, but the timing of the checking of the merchandise is not limited thereto. For example, when the settlement device 50 acquires the merchandise registration information and the total score T of the inappropriate action from the store server 40, the store clerk may check the total score T on the display 56 of the settlement device 50 and perform a merchandise collation before the actual settlement processing is completed.

### (Functional Configuration of Shopping Monitoring System)

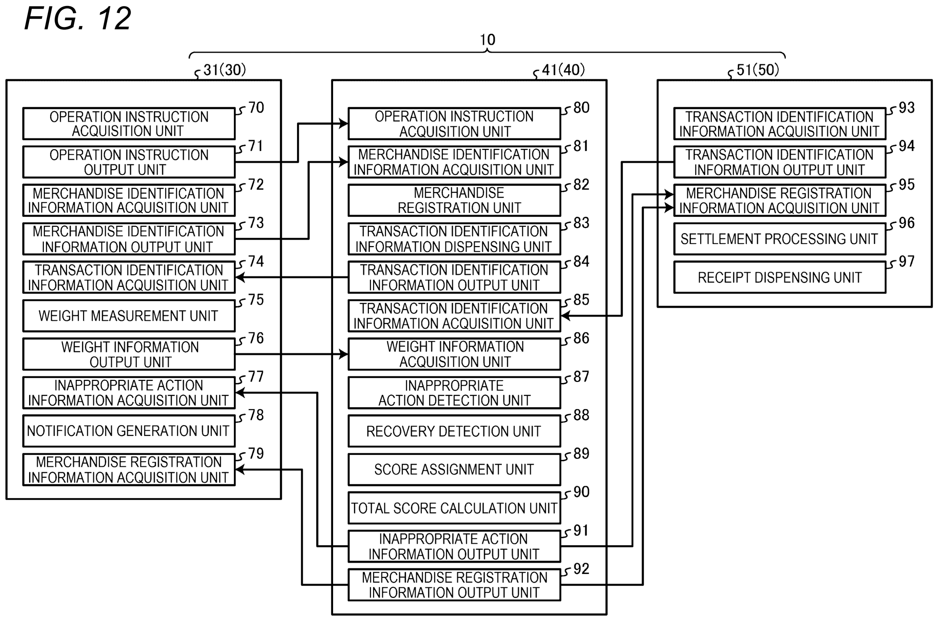

A functional configuration of the shopping monitoring system 10 will be described with reference to FIG. 12. FIG. 12 is a block diagram illustrating an example of a functional configuration of the shopping monitoring system 10 according to the embodiment.

### (Functional Configuration of Cart Terminal)

First, a functional configuration of the cart terminal 30 will be described. The control unit 31 of the cart terminal 30 loads the control program 321 in the RAM 313 and operates to implement, as functional units, an operation instruction acquisition unit 70, an operation instruction output unit 71, a merchandise identification information acquisition unit 72, a merchandise identification information output unit 73, a transaction identification information acquisition unit 74, a weight measurement unit 75, a weight information output unit 76, an inappropriate action information acquisition unit 77, a notification generation unit 78, and a merchandise registration information acquisition unit 79 illustrated in FIG. 12. All or a part of these functional units may be implemented by dedicated hardware.

The operation instruction acquisition unit 70 acquires an operation instruction (operator input) from the customer via the cart terminal 30. In this context, an operation instruction is, for example, an instruction to start shopping, a deregistration instruction to deregister merchandise that was already registered, an instruction to register new merchandise, a settlement instruction to perform settlement related to the registered merchandise, or the like. When the cart terminal 30 acquires the instruction to start shopping, the cart terminal 30 determines that the instruction to register a new merchandise is dispensed. When it is detected that a new merchandise registration button is pressed after the deregistration instruction has already dispensed, the operation instruction acquisition unit 70 ends the deregistration instruction and determines that the instruction to register a new merchandise has been dispensed.

The operation instruction output unit 71 outputs each operation instruction acquired by the operation instruction acquisition unit 70 to the store server 40.

The merchandise identification information acquisition unit 72 acquires the merchandise identification information for specifying merchandise that the customer desires to purchase by the hand scanner 23 provided on the shopping cart 3.

The merchandise identification information output unit 73 outputs, to the store server 40, information indicating either new registration of merchandise or a deregistration of merchandise that was already registered, corresponding merchandise identification information (for example, the merchandise code) acquired by the merchandise identification information acquisition unit 72, the time when the merchandise identification information was acquired, and the cart identification information (for example, the cart terminal ID) for specifying the shopping cart 3 on which the cart terminal 30 is provided, in association with each other.

The transaction identification information acquisition unit 74 acquires, from the store server 40, the transaction code (the transaction identification information) for specifying one transaction dispensed by the store server 40.

The weight measurement unit 75 measures a total weight of objects stored in the shopping basket 15 (the storing portion) of the shopping cart 3.

The weight information output unit 76 outputs, to the store server 40, the total weight of the objects, the time when the total weight is measured, and the cart identification information in association with each other.

The inappropriate action information acquisition unit 77 acquires, from the store server 40, information indicating that an inappropriate action occurs at the time of merchandise registration, the content of the inappropriate action, and the degree of importance of the inappropriate action.

The notification generation unit 78 causes the display 21 provided in the cart terminal 30 to light up or blink the indicator 66 having a color corresponding to the degree of importance of the inappropriate action and to display the content associated with the inappropriate action.

The merchandise registration information acquisition unit 79 then acquires the merchandise registration information from the store server 40.

### (Functional Configuration of Store Server)

Next, a functional configuration of the store server 40 will be described. The control unit 41 of the store server 40 loads the control program 421 in the RAM 413 and operates to implement, as functional units, an operation instruction acquisition unit 80, a merchandise identification information acquisition unit 81, a merchandise registration unit 82, a transaction identification information dispensing unit 83, a transaction identification information output unit 84, a transaction identification information acquisition unit 85, a weight information acquisition unit 86, an inappropriate action detection unit 87, a recovery detection unit 88, a score assignment unit 89, a total score calculation unit 90, an inappropriate action information output unit 91, and a merchandise registration information output unit 92 illustrated in FIG. 12. All or a part of these functional units may be implemented by dedicated hardware.

The operation instruction acquisition unit 80 acquires, from the cart terminal 30, various types of operation instruction information such as the deregistration instruction to deregister merchandise that is already registered and the settlement instruction to perform settlement related to the registered merchandise.

The merchandise identification information acquisition unit 81 acquires, from the cart terminal 30 that acquires the merchandise identification information for specifying the merchandise that the customer desires to purchase, the merchandise identification information, the time when the merchandise identification information is acquired, the time when the merchandise identification information that is already acquired is removed, and the cart identification information for specifying the shopping cart 3 in which the cart terminal 30 is provided in association with each other. The merchandise identification information acquisition unit 81 also acquires, from the cart terminal 30, information indicating whether these pieces of information concern a new registration of merchandise or a deregistration of merchandise.

The merchandise registration unit 82 performs merchandise registration processing for adding or removing the merchandise registration information based on information acquired by the merchandise identification information acquisition unit 81.

When the operation instruction acquisition unit 80 acquires the instruction to start shopping, the transaction identification information dispensing unit 83 dispenses the transaction code (the transaction identification information) for specifying one transaction associated with the cart terminal ID (the cart identification information) of the cart terminal 30 that sent the instruction.

The transaction identification information output unit 84 outputs the dispensed transaction code to the cart terminal 30.

The transaction identification information acquisition unit 85 acquires, from the settlement device 50, the transaction code for specifying a transaction for which the settlement processing is to be performed.

The weight information acquisition unit 86 acquires, from the cart terminal 30, a total weight of objects stored in the shopping basket 15 (storing portion) of the shopping cart 3, the time when the total weight was measured, and the cart identification information in association with each other. The weight information acquisition unit 86 stores the time when the acquired total weight increases or decreases beyond a predetermined threshold value along with the increase or decrease amount in the merchandise storing state file 424.

The inappropriate action detection unit 87 detects that an inappropriate action occurs during merchandise registration and detects the type of the inappropriate action based on the merchandise identification information, the time at which the merchandise identification information is acquired or removed (deregistered), the time at which the total weight of the shopping basket 15 increases or decreases beyond a predetermined threshold value, and the amount of increase or decrease in the total weight.

The inappropriate action detection unit 87 identifies at least one inappropriate action among those preset for detection. For example, an inappropriate an action can be storing merchandise different from the acquired merchandise identification in the shopping basket 15, removing a item different from the indicated merchandise identification information, not taking out the deregistered merchandise from the shopping basket 15, when purchasing a plurality of items of a same type, storing the items in the shopping basket 15 without acquiring the merchandise identification information for each item of merchandise put in the shopping basket, and storing merchandise for which the merchandise identification information is not acquired (unregistered items) in the shopping basket 15.

After the inappropriate action detection unit 87 detects an inappropriate action, the recovery detection unit 88 detects whether the customer performs a recovery (correction) of the inappropriate action based on the information acquired by the merchandise identification information acquisition unit 81 and the weight information acquisition unit 86. Specifically, the recovery detection unit 88 detects whether a recovery action occurs based on information recorded in the merchandise storing state file 424 for each of the six different types of inappropriate actions defined in the inappropriate action master 423 (see FIG. 5).

The score assignment unit 89 assigns the score S according to the degree of importance of the inappropriate action detected by the inappropriate action detection unit 87. When the inappropriate action is recovered, the score assignment unit 89 cancels the score S assigned to the inappropriate action.

The total score calculation unit 90 calculates the total score T indicating the occurrence state of the inappropriate action occurring in the cart terminal 30 having the same cart identification information during one transaction based on the score S assigned by the score assignment unit 89. The total score T is, for example, a total value of the scores S.

The inappropriate action information output unit 91 outputs, to the cart terminal 30, information indicating that the inappropriate action occurs in the shopping cart 3 provided with the cart terminal 30, the content of the inappropriate action, and the degree of importance (for example, the score S) of the inappropriate action. The inappropriate action information output unit 91 outputs, to the settlement device 50 that outputs the transaction code, the total score T, which is a total value of the scores S of the inappropriate actions occurring in the transaction associated with the transaction code.

The merchandise registration information output unit 92 outputs the merchandise registration information and the total score T to the settlement device 50 that performs settlement for the merchandise registered by the customer. The merchandise registration information output unit 92 then outputs the merchandise registration information to the corresponding cart terminal 30 each time merchandise is registered and each time merchandise is deregistered.

### (Functional Configuration of Settlement Device)

Next, a functional configuration of the settlement device 50 will be described. The control unit 51 of the settlement device 50 develops the control program 521 in the RAM 513 and operates to implement, as functional units, a transaction identification information acquisition unit 93, a transaction identification information output unit 94, a merchandise registration information acquisition unit 95, a settlement processing unit 96, and a receipt dispensing unit 97 illustrated in FIG. 12. All or a part of these functional units may be implemented by dedicated hardware.

The transaction identification information acquisition unit 93 acquires a transaction code (transaction identification information) for specifying one transaction from the cart terminal 30. Specifically, the transaction identification information acquisition unit 93 reads the code symbol including the transaction code displayed on the display 21 of the cart terminal 30 with the hand scanner 58.

The transaction identification information output unit 94 outputs the transaction code acquired by the transaction identification information acquisition unit 93 to the store server 40 that performs registration of merchandise and monitoring of a fraudulent action.

The merchandise registration information acquisition unit 95 acquires, from the store server 40, the merchandise registration information in which the merchandise identification information for specifying merchandise that the customer desires to purchase is registered, and the total score T indicating the occurrence state of the inappropriate action occurring in the shopping cart provided with the cart terminal 30 during one transaction.

The settlement processing unit 96 performs settlement processing of paying the price for the registered merchandise with the payment method designated by the customer.

The receipt dispensing unit 97 dispenses the receipt 68 on which the merchandise registration information, the content of the settlement processing, and the total score T in a form readable only by the store clerk are printed.

### (Flow of Processing Performed by Cart Terminal)

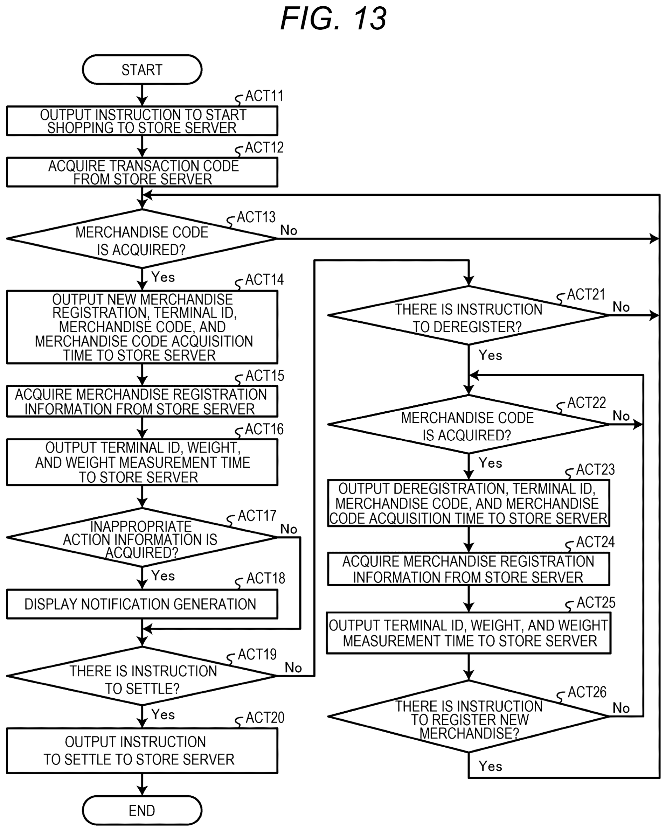

A flow of processing performed by the cart terminal 30 provided in the shopping monitoring system 10 according to the embodiment will be described with reference to FIG. 13. FIG. 13 is a flowchart of processing performed by the cart terminal 30 provided in the shopping monitoring system 10 according to the embodiment.

The operation instruction output unit 71 outputs the instruction to start shopping acquired from the customer by the operation instruction acquisition unit 70 to the store server 40 (ACT11). When a shopping start button (or the like displayed on the display 21 of the cart terminal 30 is pressed, the operation instruction acquisition unit 70 determines that an instruction to start shopping has been made.

The transaction identification information acquisition unit 74 acquires a transaction code (transaction identification information) for specifying one transaction from the store server 40 (ACT12).

The merchandise identification information acquisition unit 72 determines whether the merchandise code is acquired (ACT13). If it is determined that the merchandise code is acquired (Yes in ACT13), the processing proceeds to ACT14. On the other hand, if it is not determined that the merchandise code is acquired (No in ACT13), the determination in ACT12 is repeated. The merchandise identification information acquisition unit 72 determines that the merchandise code is acquired when the hand scanner 23 provided on the shopping cart 3 reads the code symbol attached to the merchandise.

If it is determined in ACT13 that the merchandise code is acquired, the merchandise identification information output unit 73 outputs, to the store server 40, new merchandise registration, the cart terminal ID, the merchandise code, and the merchandise code acquisition time in association with each other (ACT14).

The merchandise registration information acquisition unit 79 then acquires the merchandise registration information from the store server 40 (ACT15). The acquired merchandise registration information is displayed on the display 21 of the cart terminal 30, and the customer checks that the merchandise that the customer desires to purchase is being registered.

The weight information output unit 76 outputs, to the store server 40, the cart terminal ID, the total weight of an object stored in the shopping basket 15 of the shopping cart 3 measured by the weight measurement unit 75, and the time when the weight is measured in association with each other (ACT16). The weight information output unit 76 outputs the weight information at predetermined time intervals (for example, once per second). A timing at which the weight information output unit 76 outputs the weight information may be only within a predetermined time range after the merchandise code is acquired in ACT13, or the weight information may be continuously output at predetermined time intervals while the flowchart of FIG. 13 is executed.

The inappropriate action information acquisition unit 77 determines whether information indicating that an inappropriate action occurs when the merchandise is registered is acquired from the store server 40 (ACT17). If it is determined that the information indicating that the inappropriate action occurs is acquired from the store server 40 (Yes in ACT17), the processing proceeds to ACT18. On the other hand, if it is not determined that the information indicating that the inappropriate action occurs is acquired from the store server 40 (No in ACT17), the processing proceeds to ACT19.

If it is determined in ACT17 that the information indicating that the inappropriate action occurs is acquired from the store server 40, the notification generation unit 78 causes the display 21 provided in the cart terminal 30 to light up or blink the indicator 66 in a color corresponding to the degree of importance of the inappropriate action and to pop-up display the content of the inappropriate action (ACT18).

The operation instruction acquisition unit 70 determines whether an instruction to perform settlement is acquired from the customer (ACT19). If it is determined that the instruction to perform settlement is acquired (Yes in ACT19), the processing proceeds to ACT20. On the other hand, if it is not determined that the instruction to perform settlement is acquired (No in ACT19), the processing proceeds to ACT21.

In ACT19, if it is determined that the instruction to perform the settlement is acquired, the operation instruction output unit 71 outputs that the instruction to perform the settlement is performed to the store server 40 (ACT20). Thereafter, the cart terminal 30 ends the processing.

On the other hand, if it is not determined in ACT19 that the instruction to perform settlement is acquired, the operation instruction acquisition unit 70 checks whether a deregistration instruction (to deregister a merchandise item which was already registered) is acquired from the customer (ACT21). If it is determined that the instruction to deregister is acquired (Yes in ACT21), the processing proceeds to ACT22. On the other hand, an instruction to deregister is not acquired (No in ACT21), the processing returns to ACT13. When a deregistration button or the like displayed on the display 21 of the cart terminal 30 is pressed, the operation instruction acquisition unit 70 determines that an instruction to deregister an item of merchandise which has been already registered has been made.

If it is determined in ACT21 that the instruction to deregister is acquired, the merchandise identification information acquisition unit 72 next determines whether a merchandise code is acquired (ACT22). If it is determined that a merchandise code is acquired (Yes in ACT22), the processing proceeds to ACT23. On the other hand, if a merchandise code is not acquired (No in ACT22), the determination in ACT22 is repeated.

If it is determined in ACT22 that a merchandise code is acquired, the merchandise identification information output unit 73 outputs, to the store server 40, a merchandise deregistration, the cart terminal ID, the merchandise code, and the merchandise code acquisition time in association with each other (ACT23).

The merchandise registration information acquisition unit 79 then acquires the merchandise registration information from the store server 40 (ACT24). The acquired merchandise registration information is displayed on the display 21 of the cart terminal 30, and the customer checks that the specific merchandise being deregistered is being deleted.

The weight information output unit 76 outputs, to the store server 40, the cart terminal ID, the total weight of the object stored in the shopping basket 15 of the shopping cart 3 as measured by the weight measurement unit 75, and the time when the weight was measured in association with each other (ACT25). The weight information output unit 76 outputs weight information at predetermined time intervals (for example, once per second). The timing at which the weight information output unit 76 outputs the weight information may be set to be only within a predetermined time range after the merchandise code is acquired in ACT22 or the weight information may be continuously output at predetermined time intervals while the processing associated with the flowchart of FIG. 13 is being executed.

The operation instruction acquisition unit 70 determines whether registration of a new merchandise is instructed (ACT26). If it is determined that the registration of a new merchandise is instructed (Yes in ACT26), the processing returns to ACT13. On the other hand, if it is not determined that the registration of a new merchandise is instructed (No in ACT26), the processing returns to ACT22, and the deregistration of the merchandise is continued.

### (Flow of Processing Performed by Store Server)

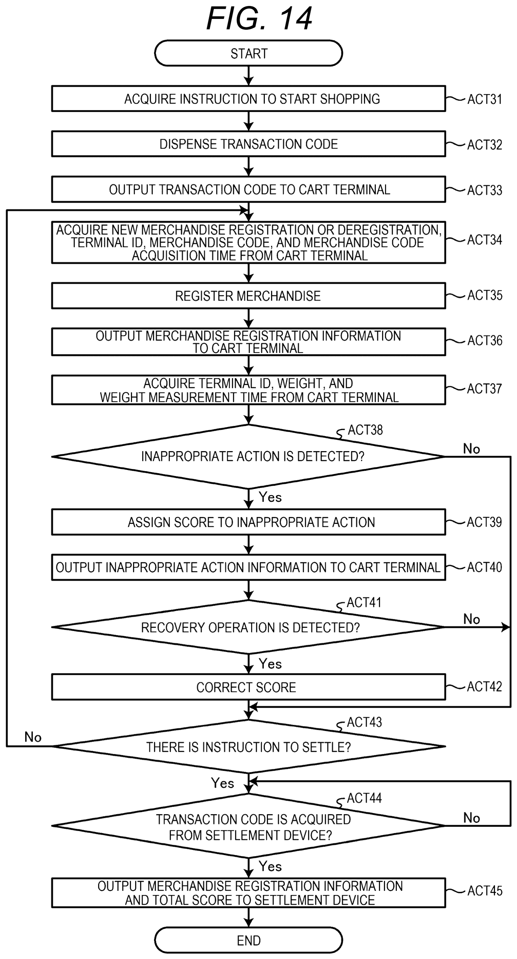

A flow of processing performed by the store server 40 provided in the shopping monitoring system 10 according to the embodiment will be described with reference to FIG. 14. FIG. 14 is a flowchart of processing performed by the store server 40 provided in the shopping monitoring system 10 according to the embodiment.

The operation instruction acquisition unit 80 acquires the instruction to start shopping from the cart terminal 30 (ACT31).

The transaction identification information dispensing unit 83 dispenses the transaction code (the transaction identification information) for specifying one transaction (ACT32).

The transaction identification information output unit 84 outputs the transaction code to the cart terminal 30 (ACT33).

The merchandise identification information acquisition unit 81 acquires, from the cart terminal 30, information indicating either a registration of a new item or a deregistration. The cart terminal ID, the merchandise code, and the merchandise code acquisition time associated with the new registration or the deregistration are provided in association with each other (ACT34).

The merchandise registration unit 82 performs the merchandise registration processing based on the information acquired by the merchandise identification information acquisition unit 81 (ACT35).

The merchandise registration information output unit 92 then outputs the merchandise registration information to the corresponding cart terminal 30 (ACT36).

The weight information acquisition unit 86 acquires, from the cart terminal 30, a total weight of the shopping basket 15 (the storing portion) provided in the shopping cart 3 and configured to allow merchandise to be stored, the time when the total weight is measured, and the cart identification information in association with each other (ACT37). At this time, the weight information acquisition unit 86 detects whether the acquired total weight increases or decreases beyond a predetermined value, and reflects a result thereof in the merchandise storing state file 424.

The inappropriate action detection unit 87 determines whether the inappropriate action is detected at the time of merchandise registration (ACT38). If it is determined that the inappropriate action is detected at the time of merchandise registration (Yes in ACT38), the processing proceeds to ACT39. On the other hand, if it is not determined that the inappropriate action is detected at the time of merchandise registration (No in ACT38), the processing proceeds to ACT43.

If it is determined that the inappropriate action is detected at the time of the merchandise registration in ACT38, the score assignment unit 89 assigns the score S according to the degree of importance of the inappropriate action detected by the inappropriate action detection unit 87 (ACT39).

The inappropriate action information output unit 91 outputs, to the cart terminal 30, information indicating that the inappropriate action occurs in the shopping cart 3 provided with the cart terminal 30, the content of the inappropriate action, and the degree of importance (for example, the score S) of the inappropriate action (ACT40).

The recovery detection unit 88 determines whether the customer performs a recovery operation on the inappropriate action based on the information acquired by the merchandise identification information acquisition unit 81 and the weight information acquisition unit 86 (ACT41). If it is determined that the customer performs the recovery operation on the inappropriate action (Yes in ACT41), the processing proceeds to ACT42. On the other hand, if it is not determined that the customer performs the recovery operation on the inappropriate action (No in ACT41), the processing proceeds to ACT43.

If it is determined in ACT41 that the customer performs the recovery operation on the inappropriate action, the score assignment unit 89 performs correction to cancel the score S assigned to the inappropriate action (ACT42).

The operation instruction acquisition unit 80 determines whether an instruction to perform settlement is acquired from the cart terminal 30 (ACT43). If it is determined that the instruction to perform settlement is acquired (Yes in ACT43), the processing proceeds to ACT44. On the other hand, if it is not determined that the instruction to perform settlement is acquired (No in ACT43), the processing proceeds to ACT34.

When it is determined in ACT43 that the instruction to perform the settlement is acquired, the transaction identification information acquisition unit 85 determines whether the transaction code for specifying the transaction for which the settlement processing is performed is acquired from the settlement device 50 (ACT44). If it is determined that the transaction code is acquired from the settlement device 50 (Yes in ACT44), the processing proceeds to ACT45. On the other hand, if it is not determined that the transaction code is acquired from the settlement device 50 (No in ACT44), the determination in ACT44 is repeated.

If it is determined in ACT44 that the transaction code is acquired from the settlement device 50, the merchandise registration information output unit 92 outputs the merchandise registration information to the settlement device 50, and the inappropriate action information output unit 91 outputs the total score T to the settlement device 50 (ACT45). Thereafter, the store server 40 ends the processing.

### (Flow Of Processing Performed by Settlement Device)

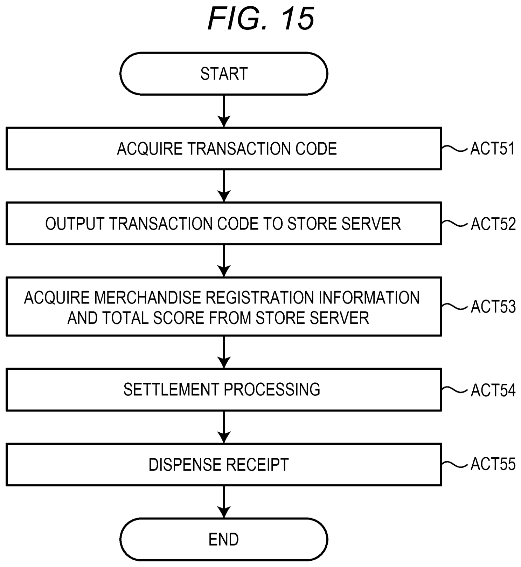

A flow of processing performed by the settlement device 50 provided in the shopping monitoring system 10 according to the embodiment will be described with reference to FIG. 15. FIG. 15 is a flowchart of processing performed by the settlement device 50 provided in the shopping monitoring system 10 according to the embodiment.

The transaction identification information acquisition unit 93 acquires the transaction code by reading the code symbol including the transaction code displayed on the display 21 of the cart terminal 30 (ACT51).

The transaction identification information output unit 94 outputs the transaction code acquired by the transaction identification information acquisition unit 93 to the store server 40 that performs merchandise registration and monitoring of a fraudulent action (ACT52).

The merchandise registration information acquisition unit 95 acquires, from the store server 40, the merchandise registration information and the total score T indicating the occurrence state of the inappropriate action occurring in the shopping cart provided with the cart terminal 30 during one transaction (ACT53).

The settlement processing unit 96 performs the settlement processing of paying the price for the registered merchandise with the payment method designated by the customer (ACT54).

The receipt dispensing unit 97 dispenses the receipt 68 on which the merchandise registration information, the content of the settlement processing, and the total score T (in a format decipherable only by the store clerk) are printed (ACT55). Thereafter, the settlement device 50 ends the processing.

Although an example of the flow of processing performed by the shopping monitoring system 10 according to the embodiment is described above, the flow of processing performed by the shopping monitoring system 10 is not limited to this specific example. That is, the flow of the processing performed by the shopping monitoring system 10 may be implemented with various modifications and still be capable of providing the same functions and results as implemented according to each flowcharts discussed above.

In an example, the settlement device 50 is described as having the customer and the store clerk face each other during operation, but in other examples the settlement device 50 may be a self-service type that can be operated by the customer without the store clerk. In such a case, it may be desirable that the settlement device 50 is configured such that a store clerk is called or signaled whenever the total score T acquired from the store server 40 exceeds some predetermined value. Then, the called store clerk performs the collation operation of collating the purchased merchandise to the printed content on the receipt using a review method selected according to the value of the total score T indicated on the receipt of the like.

### (Effects of Embodiment)

As described above, the cart terminal 30 (a merchandise registration device for a shopping cart) according to an embodiment includes the merchandise identification information acquisition unit 72 configured to acquire, by use of the hand scanner 23 provided on the shopping cart 3, a merchandise code (merchandise identification information) for specifying merchandise that a customer desires to purchase. The merchandise identification information output unit 73 is configured to output, to a store server 40 (information processing device) that is configured to perform registration of the merchandise and also monitoring of fraudulent actions, information for either a new registration or a deregistration of merchandise, the merchandise code acquired by the merchandise identification information acquisition unit 72, the time at which the merchandise code was acquired, and the cart identification information for specifying (identifying) the shopping cart 3 in association with each other. The transaction identification information acquisition unit 74 is configured to acquire, from the store server 40, a transaction code (transaction identification information) for specifying the present transaction. A weight measurement unit 75 is configured to measure a total weight of an object stored in the shopping basket 15 (a storing portion) of the shopping cart 3. A weight information output unit 76 is configured to output, to the store server 40, the total weight of the object, the time at which the total weight was measured, and the cart identification information in association with each other. An inappropriate action information acquisition unit 77 is configured to acquire, from the store server 40, information indicating that an inappropriate action occurred during merchandise registration (shopping), the type of the inappropriate action, and the degree of importance assigned to the inappropriate action. A notification generation unit 78 is configured to cause an indicator 66 to light up or blink in a color corresponding to the degree of importance of the detected inappropriate action and to display content associated with the detected inappropriate action on the display 21 or the like. Therefore, it is possible to motivate the customer to modify (recover) the inappropriate action. Therefore, by preventing the inappropriate action from remaining uncorrected, it is possible to reduce the time and effort for collating (comparing) the purchased merchandise with the printed content on the receipt, which can be performed by the store clerk at the time of settlement.

The store server 40 (an information processing device) includes the merchandise identification information acquisition unit 81 configured to acquire, from the cart terminal 30, the merchandise identification information of an item the customer desires to purchase, a time when the merchandise identification information is acquired, a time when previously acquired merchandise identification information is removed (deregistered), and cart identification information for specifying the shopping cart 3 in association with each other. The store server 40 also includes a merchandise registration unit 82 configured to add or remove merchandise registration information based on the merchandise identification information acquired by the merchandise identification information acquisition unit 81. The store server 40 further includes a transaction identification information dispensing unit 83 configured to dispense transaction identification information to the cart terminal 30. A weight information acquisition unit 86 of the store server 40 is configured to acquire, from the cart terminal 30, a total weight of objects stored in the shopping basket 15 (a storing portion) of the shopping cart 3, a time when the total weight was measured, and the cart identification information in association with each other. An inappropriate action detection unit 87 of the store server 40 is configured to detect whether an inappropriate action occurs during the merchandise registration and the type of inappropriate action based on the merchandise identification information, the time when the merchandise identification information is acquired, the time when already acquired merchandise identification information is removed (deregistered), the time when a total weight of the shopping basket 15 increases or decreases beyond a predetermined threshold value, and the amount of increase or decrease in the total weight. A score assignment unit 89 of the store server 40 is configured to assign a score S according to a degree of importance of the type of inappropriate action detected by the inappropriate action detection unit 87. A total score calculation unit 90 of the store server 40 is configured to calculate a total score T cumulative occurrences of inappropriate actions during the same transaction. An inappropriate action information output unit 91 is configured to output information to the cart terminal 30 indicating when an inappropriate action occurs, the type (or content) of the inappropriate action, and the associated degree of importance of the detected inappropriate action. A merchandise registration information output unit 92 is configured to output the merchandise registration information and the total score T to the settlement device 50. Therefore, it is possible to reliably detect inappropriate actions performed by the customer and output a corresponding result of detections to the cart terminal 30 and the settlement device 50. Therefore, it is possible to motivate the customer who performs an inappropriate action to modify (recover or correct) the inappropriate action, and it is thus possible to reduce the time and effort of transaction content collation operation of collating the purchased merchandise to the printed content on the receipt, which may be performed by the store clerk at the time of settlement.

The inappropriate action detection unit 87 detects actions such as storing merchandise different from that actually registered in the shopping basket 15 (the storing portion), deregistering merchandise different from the merchandise removed from the shopping basket 15, not taking out the deregistered merchandise from the shopping basket 15, placing multiple instances of the same merchandise in the shopping basket 15 without registering each instance individually (or in full), or storing unregistered merchandise in the shopping basket 15. Therefore, it is possible to reliably detect various inappropriate actions predicted to occur.

The store server 40 (the information processing device) according to an embodiment further includes a recovery detection unit 88 that detects whether the customer performs a recovery (correction) related to a detected inappropriate action based on information acquired by the merchandise identification information acquisition unit 81 and the weight information acquisition unit 86. The score assignment unit 89 may then delete the score S assigned to a detected inappropriate action on the condition that the recovery detection unit 88 detects that the inappropriate action has been recovered (corrected). Therefore, when the customer corrects the inappropriate action, the information indicating that the detection of an inappropriate action can be corrected or adjusted. Accordingly, when the customer corrects the inappropriate action, it may not be necessary for the store clerk to perform the collation operation at the time of settlement.

The settlement device 50 according to an embodiment includes a transaction identification information acquisition unit 93 configured to acquire transaction identification information from the cart terminal 30 (a merchandise registration device for a shopping cart) on a shopping cart 3, a transaction identification information output unit 94 configured to output the acquired transaction identification information to the store server 40 (an information processing device), a merchandise registration information acquisition unit 95 configured to acquire, from the store server 40, merchandise registration information specifying the merchandise items that the customer desires to purchase, and a total score T indicating an occurrence or occurrences of an inappropriate action during a transaction, and a receipt dispensing unit 97 configured to dispense a receipt 68 on which the merchandise registration information and the total score T in a format readable by a store clerk are printed. Therefore, the store clerk can immediately recognize that the customer may have performed an inappropriate action by viewing the receipt 68. Accordingly, the store clerk can perform a collation operation for collating the purchased merchandise with the printed content on the receipt according to the total score T. Since generally only the store clerk can recognize the total score T value printed on the receipt 68, any heightened collation operation can be performed without being noticed by the customer.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the gist of the disclosure. The accompanying claims and their equivalents are intended to cover such forms or modifications as would fall within the scope of the disclosure.

## Claims

1. A merchandise registration device for a shopping cart, the merchandise registration device comprising:
a communication controller connectable to a store server device;
a peripheral device controller connectable to a product scanner device and a weight sensor on a shopping cart; and
a control unit configured to:
acquire a merchandise code from the product scanner device;
generate a user notification in response to receiving the inappropriate action notice to output notice information to a user corresponding to the detected action type indicated by the inappropriate action notice.

2. The merchandise registration device according to claim 1, further comprising:
a display screen, wherein
the generated user notification causes the display screen to display the notice information to the user of the shopping cart.

3. The merchandise registration device according to claim 2, further comprising:
an indicator light, wherein
the generated user notification additionally causes the indicator light to emit light of a color corresponding to the action type indicated by the inappropriate action notice.

4. The merchandise registration device according to claim 1, further comprising:
an indicator light, wherein
the generated user notification causes the indicator light to emit light of a color corresponding to the action type indicated by the inappropriate action notice.

5. The merchandise registration device according to claim 1, wherein the weight sensor measures the weight of objects placed in a storage portion of the shopping cart.

6. The merchandise registration device according to claim 1, wherein the detected action type is a placing of an item in the shopping cart having a weight different from an expected weight of the item based on the merchandise code acquired for the merchandise registration event immediately preceding a weight change measured by the weight sensor.

7. A shopping cart for a merchandise registration system, comprising:
a shopping cart body having a storage portion;
a weight sensor on the shopping cart and positioned on the shopping cart to detect weight changes associated with placements or removals of items from the storage portion of the shopping cart body;
a product scanner device on the shopping cart for reading merchandise codes from merchandise items;
a user input device on the shopping cart for receiving user input operations; and
a cart terminal on the shopping cart and including a merchandise registration device according to any one of claims 1 to 6, wherein the peripheral device controller of the merchandise registration device is connected to the product scanner device, the weight sensor, and the user input device.

8. The shopping cart according to claim 7, wherein the communication controller is a wireless network interface device.

9. The shopping cart according to claim 7 or 8, wherein the user input device is a touch panel integrated with the display screen.

10. The shopping cart according to any one of claims 7 to 9, wherein the product scanner is a barcode reader.

11. A merchandise registration system, comprising:
a store server device; and
a merchandise registration device according to any one of claims 1 to 6; and
a product scanner device for reading merchandise codes from merchandise items.

12. The merchandise registration system according to claim 11, wherein the store server device includes a processor configured to:
detect an inappropriate action based upon the merchandise code, the weight change information acquired from the weight sensor, the code acquisition time for the merchandise code, the weight acquisition time for the weight change information, and the indication the merchandise code was acquired for a merchandise registration event or a merchandise deregistration event output from the merchandise registration device; and
output the inappropriate action notification corresponding to the detected inappropriate action.

13. The merchandise registration system according to claim 12, wherein the processor is further configured to:
assign a score according to a preset degree of importance for the detected inappropriate action; and
calculate a total cumulative score based on the assigned score for each detected inappropriate action in a same transaction.

14. The merchandise registration system according to claim 13, further comprising:
a settlement terminal for the user of the merchandise registration device to settle a sales transaction including merchandise registered using the merchandise registration device.

15. The merchandise registration system according to claim 14, wherein the settlement terminal is configured to output a receipt for the sales transaction including an indication of the total cumulative score for the sales transaction, preferably, the indication of the total cumulative score for the sales transaction is encoded.
